# EUROPEAN PATENT SPECIFICATION

(11) **EP 3 452 405 B1**
(45) Date of publication and mention of the grant of the patent: **27.10.2021**
(21) Application number: 17792931.2
(22) Date of filing: 03.05.2017
(51) Int. Cl.: B67D 9/00, B63B 27/24, B63B 27/34, F16L 37/08, F16L 37/12, F16L 37/62

(54) **OFFSHORE LOADING HOSE COUPLING**
OFFSHORE-BELADUNGSSCHLAUCHKOPPLUNG
RACCORD DE TUYAU FLEXIBLE DE CHARGEMENT EN MER

(30) Priority: 04.05.2016 NO 20160751
(43) Date of publication of application: 13.03.2019
(73) Proprietor: Sealoading Holding AS, 4836 Arendal (NO)
(72) Inventor: AARSNES, Jan Vidar, 4817 His (NO); SYVERTSEN, Kåre, 4658 Tveit (NO)
(74) Representative: Protector IP AS
(86) International application number: PCT/NO2017/050106
(87) International publication number: WO 2017/192044

(56) References cited:
- EP-A1- 2 256 395
- WO-A1-2008/115048
- WO-A1-2010/137990
- WO-A1-2011/159168
- AU-A1- 2006 236 035
- CN-U- 202 868 167
- CN-U- 204 281 291
- DE-A1- 1 931 597
- FR-A1- 2 966 553
- GB-A- 2 009 352
- GB-A- 2 496 872
- US-A- 4 052 045

## Description

The present invention relates to an offshore loading hose coupling. Such a coupling is typically used when transferring fluids between floating structures at sea. Typically, a tanker which is positioned adjacent a loading buoy will lift an end portion of a loading hose onboard, and connect the hose to a connection flange by means of an offshore loading hose coupling. The hose is typically a floating, flexible hose that connects to a loading station of the loading buoy. The receiving connection flange on the tanker can connect to a loading manifold. When the hose is not in use, it will typically be stored on a hose reel on the loading station, or it may remain floating in the sea.

### Background

Since such fluid transfer between the loading station and the tanker is performed at sea, movement between the hose coupling and the receiving connection flange on the tanker may occur, particularly in harsh weather. Such movement may represent a hazard to the personnel making the connection.

Moreover, arranging the hose coupling correctly, directly facing the receiving connection flange by means of crane operation may be difficult. Thus, it is known to provide guiding structures to the hose coupling. Publication WO2010137990 describes such a hose coupling with a guiding structure. In this solution, the receiving connection flange is provided with a funnel element, which is configured to receive a guidepost that is fixed to the opposite coupling part. By means of a pull-in wire, the guidepost is pulled into the funnel element, thereby ensuring correct alignment of the two oppositely arranged coupling flanges.

Publication WO2014122122 discloses an alternative guiding structure. Also in this solution, the guiding assembly comprises a guiding structure on both coupling parts, i.e. both on the moved connection flange and on the fixed, waiting connection flange. In this solution, a guiding means, in the form of a bar or a ball element, is landed in a receiving cradle, and then the connecting flange is pivoted into alignment with the fixed flange.

Both of the solutions in WO2014122122 and WO2010137990 require that the receiving connection flange, typically on the tanker, is configured according to the hose coupling on the hose in question. In other words, the guiding system on the tanker must be adjusted to the guiding system used on the loading buoy, or its hose.

Publication GB2009352 discloses a pipe coupling for connection of two axially aligned and flanged pipes or hoses. The coupling comprises dogs that are configured to engage with an opposite pipe flange and to thus pull the two opposite flanges together. The coupling further comprises two centering jaws that function as guide faces for mutual alignment of the two flanges.

A similar coupling is shown in CN204281291U. In this solution, locking dogs are rotated about respective rotation axis that are parallel with the axial extension of the coupling. The locking dogs rotate into and out of engagement to maintain or release the connection of the two opposite flanges. Furthermore, this coupling has three guiding faces that align the opposite flanges when being moved axially towards each other.

Another similar solution for a coupling device for a marine loading arm is shown in WO2008115048.

It is an object of the present invention to provide a simplified solution for such a guiding system. In particular, it is an object to provide an offshore loading hose coupling, which is compatible with receiving connection flanges, which are not equipped with guiding means.

### The invention

According to the present invention, there is provided an offshore loading hose coupling having a coupling flange, a plurality of guide elements, which extend axially beyond the coupling flange and which comprise a landing and sliding face. The offshore loading hose coupling further comprises a plurality of pull-in and clamping units, which are movable along the guide elements in a substantially axial direction, and which are configured to pull in and clamp a connection flange to the coupling flange, as they comprise a forward engagement edge and a rear engagement edge configured to engage said connection flange and coupling flange.

The pull-in and clamping units and the guide elements comprise guiding means that are configured to guide the pull-in and clamping means along a pull-in path and a successive clamping path during pull-in and clamping. Moreover, the pull-in and clamping units are arranged between two plates. According to the invention, the plates have flange retention edges facing at least partly in an axial rearwards direction, which extend radially inwards beyond the radial extension of the coupling flange.

By pulling in a connection flange is meant that the connection flange is pulled in with respect to the position of the hose coupling. In practice, the connection flange is normally a fixed flange, such as fixed to a tanker or the like, and when pulling in the connection flange, the hose coupling moves with respect to the connection flange.

The pull-in path can constitute a linear movement in the axial direction, and the clamping path can constitute a pivoting movement of the pull-in and clamping units, wherein said pivoting movement can take place about a pivot axis extending in a direction orthogonally to a centerline through the coupling flange and with a distance from the centerline.

When in an extended, not pulled in position, radially inwardly facing edges of the plates can advantageously extend radially inwardly beyond the position of the forward engagement edge and the rear engagement edge of the pull-in and clamping units.

In this way, the pull-in and clamping units are protected from impact with the connection flange during landing of the coupling onto the connection flange.

Hence, the flange retention edges can be configured to retain a connection flange, onto which the hose coupling has landed and which has substantially the same radial extension as the coupling flange. In other words, the retention edges advantageously extend radially inwards beyond the radial extension of the connection flange, to which the hose coupling is configured to connect. With such a solution, the coupling will not slide off the connection flange after landing, as it is retained with the retention edges.

In alternative embodiments, guide elements, such as guide arms, which are not designed with the plates discussed above, may also have flange retention edges. For instance, one guide element may be in the form of a single body that extend in a substantially axial direction, beyond the connection flange reception space, where flange retention edges are arranged at the axially far end of the reception space.

In some embodiments of the present invention, the landing and sliding faces can be distributed along a curve corresponding to a curved upper flange edge of the connection flange. The two lowermost landing and sliding faces are positioned to permit entry of the connection flange into the reception space along a vertical direction. In this embodiment, at least one landing and sliding face is arranged on respective sides of a vertical plane extending through the axial center line of the coupling flange.

The hose coupling according to present invention may in some embodiments further comprise a clamping element, which is arranged below a horizontal plane extending through an axial centerline of the connection flange. The clamping element can be configured to take a non-clamped position and a clamped position, wherein the non-clamped position is axially behind the clamped position.

Here, the term axially behind the clamped position shall be construed such that the non-clamped position is a position closer to the hose end of the coupling than when in the clamped position. In this way, the clamping element will not interfere with the connection flange when the latter is inserted into the connection flange reception space.

### Example of embodiment

While various features of the invention have been presented in general terms above, a non-limiting and detailed description of an embodiment of the invention will be given in the following with reference to the drawings, in which
- Fig. 1: depicts the side of a tanker in the process of lifting aboard the end of a floating hose with a crane arrangement;
- Fig. 2: depicts the same as in Fig. 1, showing the floating hose in a further lifted position;
- Fig. 3: depicts the same as in Fig. 1 and Fig. 2, showing however the end of the floating hose laid down on the tanker deck and aligned with a fixed connection flange on the tanker;
- Fig. 4: shows a hose coupling which is not according to the invention, arranged on the end of the floating hose, before being landed on the connection flange of the tanker;
- Fig. 5: depicts the same as in Fig. 4, however showing the hose coupling in a connected position;
- Fig. 6: is a perspective view of the offshore loading hose coupling which is not according to the invention, without the hose connected;
- Fig. 7: is another perspective view of the hose coupling;
- Fig. 8: is a side view of the hose coupling;
- Fig. 9: is a side view of the hose coupling connected to a hose and in a position connected to a connection flange;
- Fig. 10: is a perspective view of the hose coupling connected to the connection flange;
- Fig. 11: is a principle diagram illustrating two landing and sliding faces of the hose coupling in relation to a connection flange;
- Fig. 12: is another principle diagram illustrating two landing and sliding faces and a connection flange reception space;
- Fig. 13: is a perspective view of another embodiment of an offshore loading hose coupling which is according to the invention, having a protection cap installed
- Fig. 14: is a perspective view of the coupling shown in Fig. 13, without the protection cap;
- Fig. 15: is a perspective view of the coupling shown in Fig. 14, in a position landed onto a fixed connection flange;
- Fig. 16: is a perspective view of the coupling shown in Fig. 15, connected to the fixed connection flange;
- Fig. 17: is a cross section side view showing the coupling in the position shown in Fig. 15;
- Fig. 18: is another cross section side view showing the coupling and the connection flange in a pulled-in but not yet connected state;
- Fig. 19: is a cross section view showing the coupling and connection flange in a connected state;
- Fig. 20: is an enlarged perspective view showing the coupling after landing on the upper edge of the connection flange;
- Fig. 21: is a perspective view corresponding to Fig. 20, showing the coupling in a pulle-in state;
- Fig. 22: is a perspective view of the coupling, with the protection cap installed;
- Fig. 23: is a front view of the coupling;
- Fig. 24: is a perspective view of the coupling, showing the hose end of the coupling and a valve operation arm;
- Fig. 25: is another enlarged perspective view of the coupling, without the connection flange.

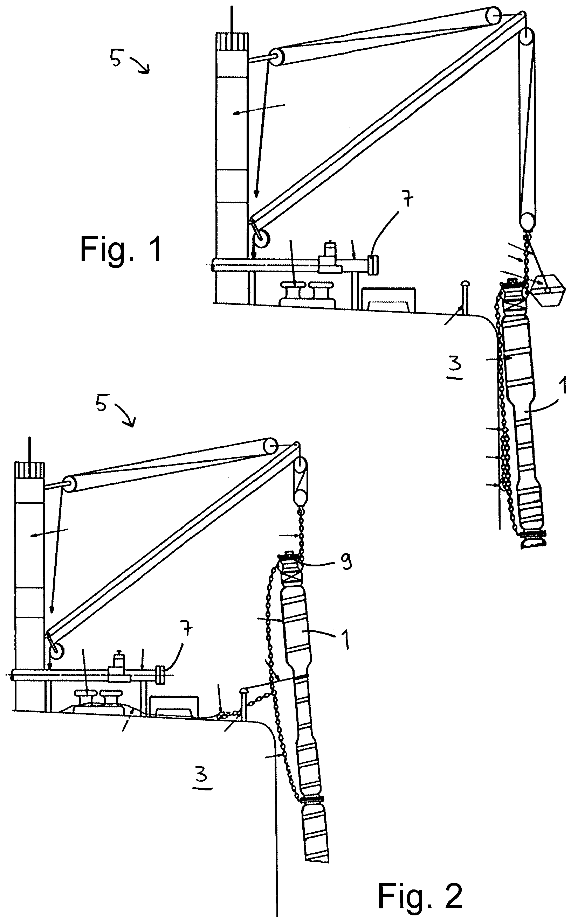

Fig. 1, Fig. 2, and Fig. 3 illustrate the process of lifting an end portion of a floating hose 1 up from the sea and onboard a tanker 3 at sea. The floating hose 1 can be extended from a loading station (not shown), which for instance may be a floating production or floating storage unit (FPSO or FSO), a moored floating buoy (e.g. a Calm buoy) which has its supply from an FPSO or an FSO, or a vessel for transfer of fluids from an FPSO or FSO to the tanker.

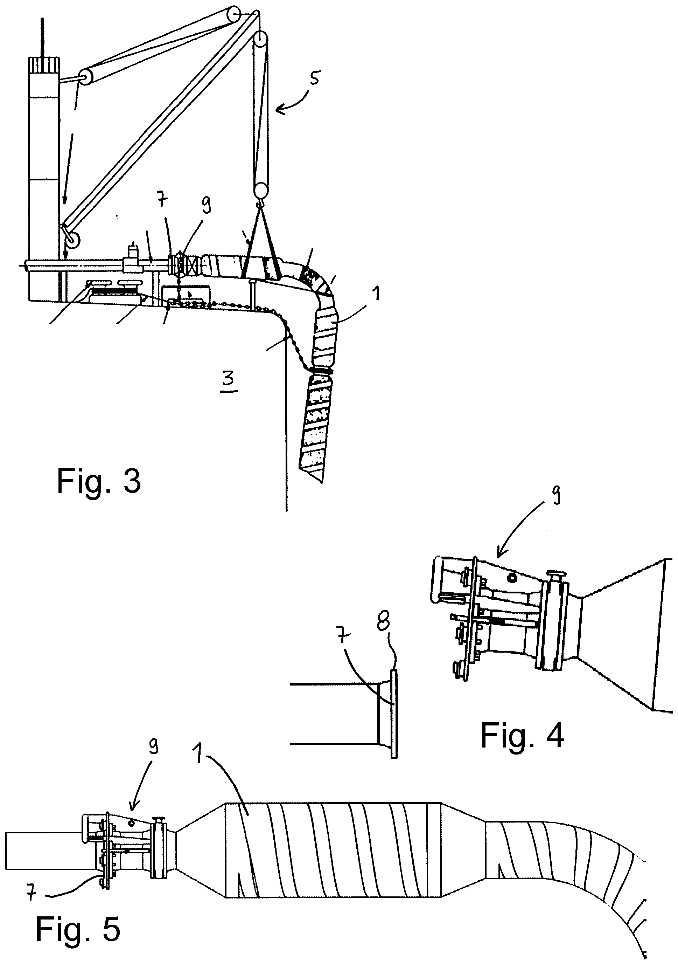

By means of a crane arrangement 5, and appropriate ropes or chains for supporting the hose 1, the end portion of the floating hose 1 is landed onto the deck of the tanker 3, as shown in Fig. 3. On the deck of the tanker 3, a connection flange 7 is installed. In this example, the connection flange 7 is fixed on the deck. On the end portion of the floating hose 1, an offshore loading hose coupling 9 is arranged. In the situation shown in Fig. 3 the hose coupling 9 has been landed and aligned with the oppositely arranged fixed connection flange 7 on the tanker 3.

Fig. 4 and Fig. 5 depict the end portion of the hose 1, the hose coupling 9, and the fixed connection flange 7 in larger detail, immediately before and after landing of the hose coupling 9, respectively. As appears from Fig. 4 and Fig. 5, the hose coupling 9 can be landed onto the fixed connection flange 7 in a substantially downward, vertical direction. It may also be moved into abutment and alignment with the fixed connection flange 7 with a substantially lateral direction, i.e. an axial direction with respect to the fixed connection flange 7.

The fixed connection flange 7 which is installed on the tanker 3, a typical example of which being shown in Fig. 4, is in the form of a pipe end having a flange attached to it. In the embodiment shown, the fixed connection flange 7 has a concentric outer edge, of which an upper portion is in the form of a curved upper flange edge 8. Notably, there is not arranged any particular equipment on the fixed connection flange 7, with the purpose of guiding the hose coupling 9. On this curved upper flange edge 8, the landing and guiding arrangement of the hose coupling 9 is configured to land and align. As will be clear from the following description, the hose coupling 9 can rest steady on the upper flange edge 8 by its own weight, after having been landed thereon with the crane arrangement 5.

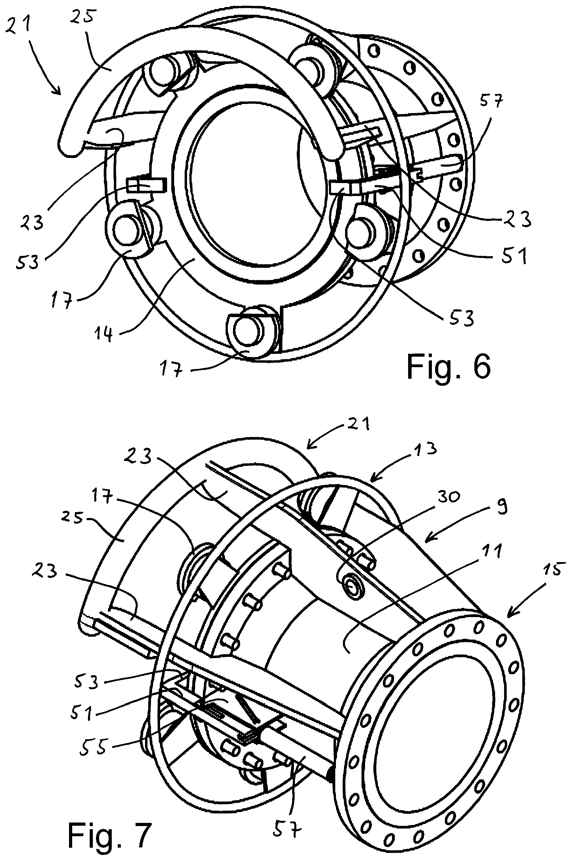

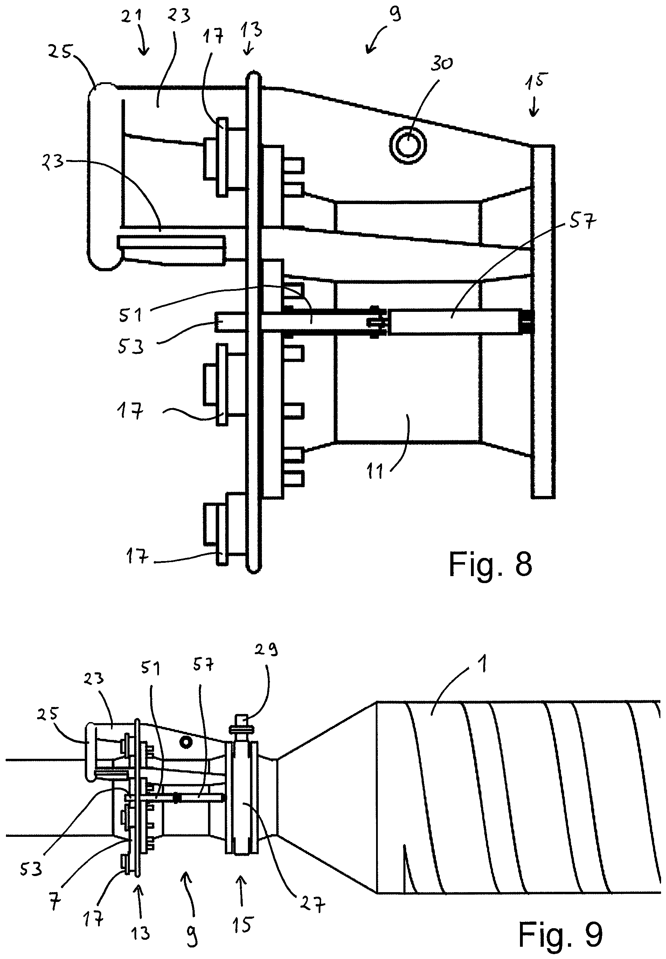

It is now referred to Fig. 6, Fig. 7 and Fig. 8, showing the offshore loading hose coupling 9 in greater detail. The hose connection 9 has a main body 11, which has a coupling end 13 and an oppositely arranged hose end 15 (cf. Fig. 8). The hose end 15 is adapted to be connected to the hose 1, as shown in Fig. 4 and Fig. 5. The coupling end 13 is configured to make a sealed interface with the fixed connection flange 7. At the coupling end 13, there is a coupling flange 14, as can be seen in Fig. 6.

When arranged in a position aligned with and abutting the fixed connection flange 7, a plurality of rotating cam locks 17 are rotated in order to fixate the hose coupling 9 to the fixed connection flange 7. As seen in Fig. 6, the cam locks 17 can receive the fixed connection flange 7 in the area between them when in the shown open position. When the fixed connection flange 7 has been installed axially within the cam locks 17, i.e. axially between the cam locks 17 and the abutting flange of the coupling end 13, the cam locks 17 are rotated into a locking position. Such cam locks are well known and will not be discussed further herein.

Extending axially out from the coupling end 13 of the main body 11, in the direction away from the hose end 15, is a landing and guiding arrangement 21. In the shown embodiment, as appears best from Fig. 6 and Fig. 7, the landing and guiding arrangement 21 comprises three axially extending guide elements, here in the form of guide arms 23. In other embodiments there may be more than three guide elements, or two guide elements. Notably, the landing and guiding arrangement 21 extends axially beyond the coupling end 13 of the main body 11 only in an upper portion of the hose coupling 9. This makes it possible to land the hose coupling 9 onto the fixed connection flange 7 with a vertical direction, hence being well suited for landing with the crane arrangement 5. Thus, referring again to Fig. 4 and Fig. 5, the landing and guiding arrangement 21 of the hose coupling 9 can be landed onto the fixed connection flange 7 with a vertical landing movement, and then the hose coupling 9 can be pulled in an axial direction into abutment with the fixed connection flange 7, while being guided with the landing and guiding arrangement 21.

In embodiments including the cam locks 17, as shown here, the landing and guiding arrangement 21 extend also axially beyond these.

In the shown embodiment, the landing and guiding arrangement 21 has three guide arms 23. At their ends, the guide arms 23 are connected to an impact bow 25. The impact bow 25 contributes in preventing bending or other kind of harm to the guide arms 23. Also, the impact bow 25 provides a non-destructive impact face, as the hose coupling 9 may collide with the ship or tanker hull when handling the end of the floating hose 1 with the crane arrangement 5.

The axial movement of the hose coupling 9 towards the fixed connection flange 7, while being guided with the landing and guiding arrangement 21, can for instance be performed with a manually operated chain jack. During such axial movement, the landing and guiding arrangement 21 of the hose coupling 9 will rest on the upper edge of the fixed connection flange 7. Such a chain jack (not shown) or other pulling means, can for be connected to a connection means 30, such as a through hole arranged in the landing and guiding arrangement 21 (cf. Fig. 7 and Fig. 8).

As an alternative though, the hose coupling 9 may be provided with a pulling arrangement 50, configured to interface with the fixed connection flange 7 and to pull the hose coupling 9 axially into abutment and alignment with the fixed connection flange 7.

In the shown embodiment, the hose coupling 9 is provided with such a pulling arrangement 50 having two pulling members 51. Here, the two pulling members are in the form of two pulling rods 51. Each pulling rod 51 is at a first end provided with a hook 53, which is configured to engage with the face of the fixed connection flange 7 that faces away from the hose coupling 9. At their opposite second end, each pulling rod 51 connects to a rod guiding arrangement 55 and a pulling actuator 57. In this embodiment, the pulling actuator is a linear driver, in form of a hydraulic piston 57. When extending the hydraulic piston 57, the pulling rod 51 will move axially towards and beyond the fixed connection flange 7, as well as pivot slightly radially outwards. When moving the hydraulic piston 57 in the opposite direction, the pulling rod 51 will move in the opposite direction (i.e. in the pulling direction). Provided the hose coupling 9 is correctly aligned with respect to the fixed connection flange 7, the hooks 53 of the pulling rods 51 will engage the fixed connection flange 7, and move the hose coupling 9 axially into abutment with the fixed connection flange 7.

The pulling rods 51 will normally be in the extended position when landing the hose coupling 9 onto the fixed connection flange 7.

Advantageously, the hydraulic pistons 57 have a hydraulic connection interface (not shown), making it possible to quick connect a hydraulic pipe supplied with pressure from a hand pump or from the hydraulic system on the tanker 3. The hydraulic pressure can thus move the hooks 53 to pull the flanges together.

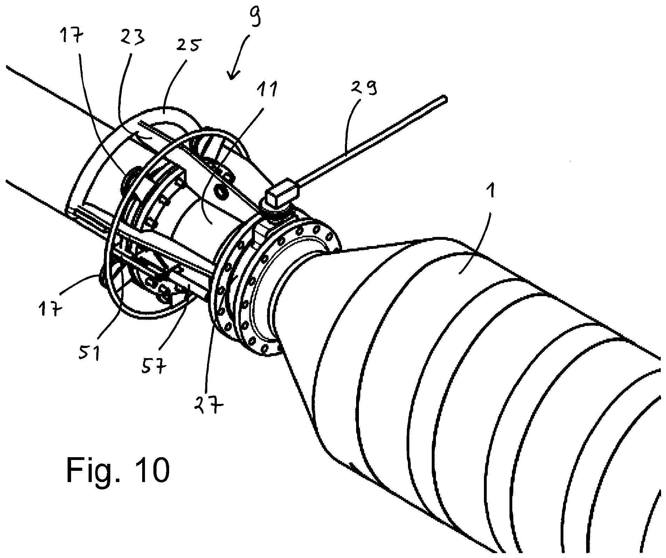

Fig. 9 depicts the offshore loading hose coupling 9 in a connected state, being connected to the fixed connection flange 7 on a tanker (not shown). Notably, between the hose coupling 9 and the floating hose 1, there is arranged a valve 27, having a valve operation arm 29. This situation is also shown with the perspective view of Fig. 10.

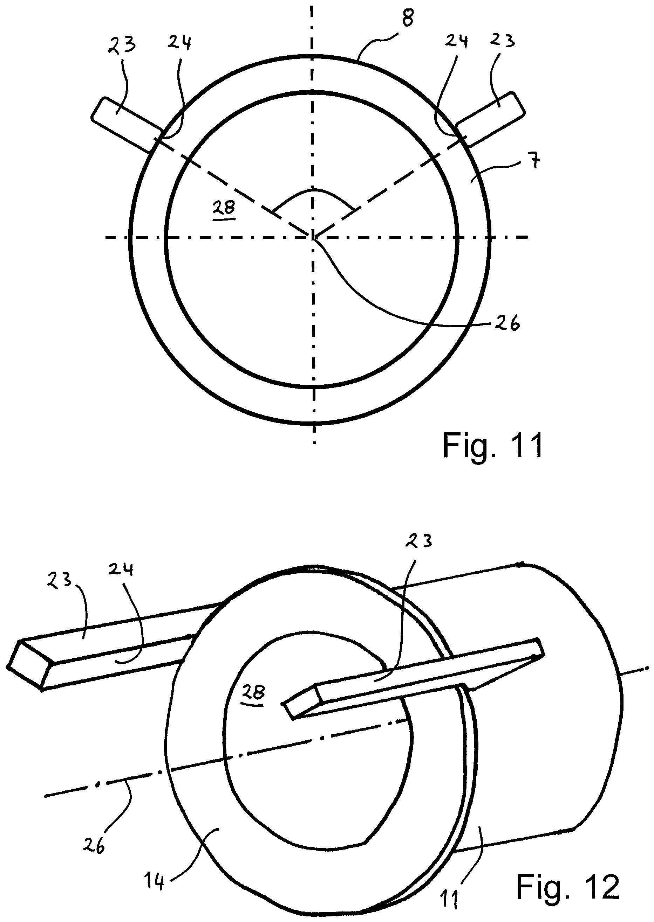

The schematic drawing of Fig. 11 is a principle sketch showing two lowermost landing and sliding faces 24 of the landing and guiding arrangement 21. In this embodiment, the two lowermost landing and guiding faces 24 are arranged on respective guide arms 23. Also shown in Fig. 11, is a horizontal plane extending through a centerline 26 of the coupling flange 14 (cf. also Fig. 12), as well as a horizontal plane extending through the centerline.

In Fig. 11, the two lowermost landing and sliding faces 24 are shown resting on the fixed connection flange 7. Notably, the landing and sliding faces 24 face in a radial direction, towards the centerline 26 of the coupling flange 24 of the hose coupling 9.

Fig. 12 is a simplified, schematic sketch depicting the landing and guiding arrangement 21 of the hose coupling 9. In the area in between and substantially below the two lowermost guiding and sliding faces 24, a connection flange reception space 28 is positioned. In Fig. 12, components of the hose end 15 (cf. Fig. 8) are omitted.

As understood by the skilled person in the art, in order for the hose coupling 9 to land onto the fixed connection flange 7 with a vertical movement (i.e. a substantially radial movement), the landing and sliding faces 24 cannot extend peripherally about the entire circumference of the fixed connection flange 7. Rather, there must be available space below the landing and guiding arrangement 21, so that the connection flange 7 may enter the connection flange reception space 28. Also, in order for the landing and guiding arrangement 21 not to get stuck or jammed to the fixed connection flange 7, the angle between the position of the two lowermost guiding and sliding faces 24, with respect to the centerline 26, should not be too large if the guiding and sliding faces 24 are snugly fitting with the outer rim of the connection flange. The indicated angle α in Fig. 11 must evidently not be larger than 180 degrees, to make it possible to land onto the fixed connection flange 7. The mutual angle α may in some embodiments be less than 120 degrees, or at least less than 160 degrees.

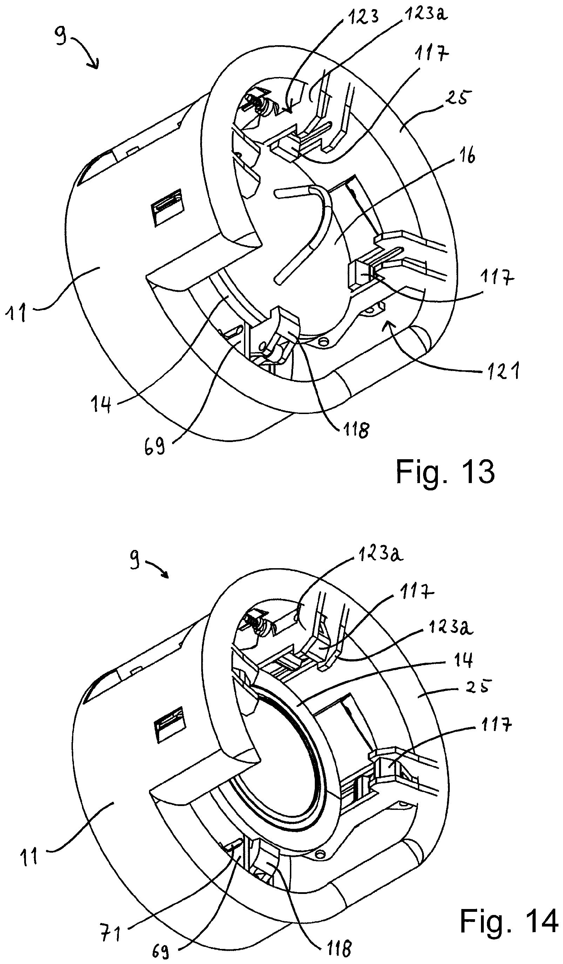

In the following, a second example of an offshore loading hose coupling 9, wherein this example is according to the invention, will be described with reference to the drawings in Fig 13 and onwards. This hose coupling 9 has several components that are identical or similar to the corresponding components of the coupling discussed above, while other components are different.

Fig. 13 depicts the offshore loading hose coupling 9 with a perspective view. It has a main body 11 and an impact bow 25. It has a landing and guiding arrangement 121 that comprises three guide elements 123 in the form of guide arms. In this embodiment, one guide arm 123 is arranged directly above the central axis (thus on a vertical plane extending through the central axis), while two additional guide arms 123 are arranged directly to the respective sides of the central axis (thus on a horizontal plane extending through the central axis). Hence, in this embodiment, the upper guide arm 123 will transfer much of the weight of the coupling 9 onto the connection flange 7, while the two laterally arranged guide arms 123 will ensure lateral alignment with respect to the connection flange 7.

Barely visible in Fig. 13 is a coupling flange 14, which is configured to be aligned with and connect with the fixed connection flange 7, such as on a tanker 3. A protection cap 16 is arranged on the coupling flange 14 to prevent ingress of water into the bore of the main body 11. The protection cap 16 is held in place by three pull-in and clamping units 117, and one clamping element 118. The three pull-in and clamping units 117 arranged to the tree guide arms 123 in a sliding manner, so that they may slide in a substantial axial direction. The clamping element 118 is also arranged to slide in a substantial axial direction. The operation of the pull-in and clamping units 117 and the clamping element 118 will be discussed in better detail further below.

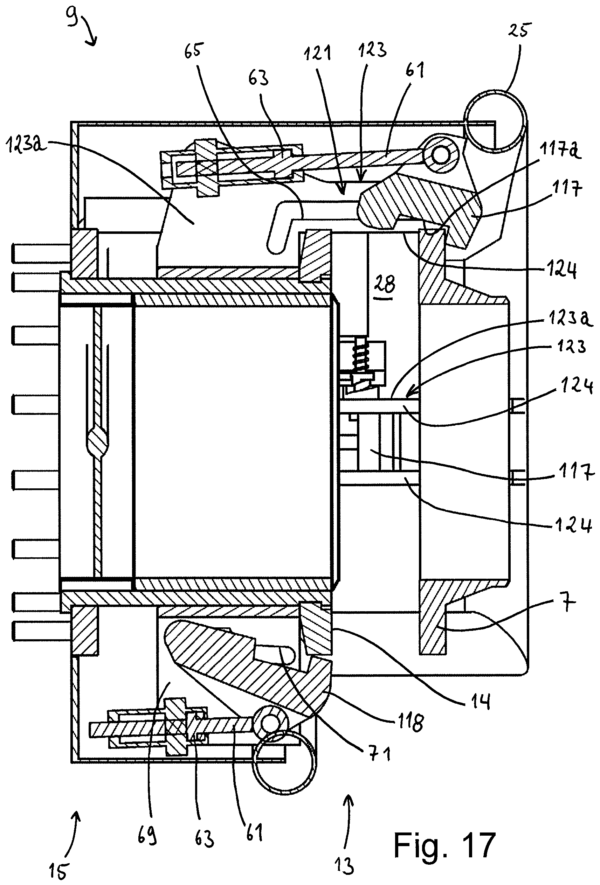

To release the protection cap 16, its engagement with the pull-in and clamping units 117 and the clamping element 118 is released. This situation is depicted in Fig. 14. In this situation, the pull-in and clamping units 117 have been moved axially forwards, while the clamping element 118 has been pivoted out if engagement and moved slightly axially backwards (towards the hose end 15). The coupling 9 is now in condition to receive (i.e. land onto) the connection flange 7 in its connection flange reception space 28 (indicated in Fig. 17).

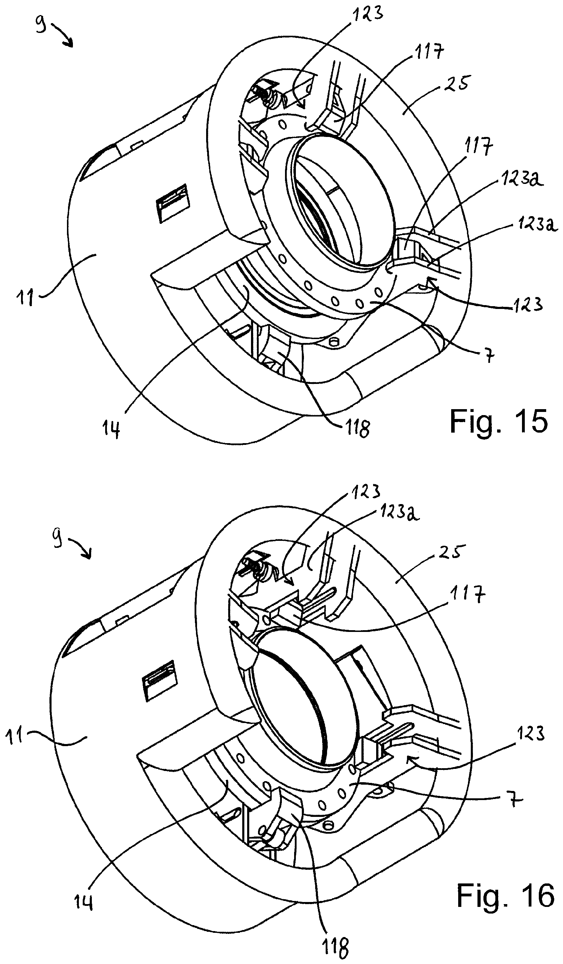

Fig. 15 depicts the situation where the hose coupling 9 has landed onto the fixed connection flange 7. For illustrational purpose, the connection flange 7 is shown without the connected pipe. The coupling 9 may now rest on the connection flange 7 with its entire weight. The three pull-in and clamping units 117 can now be employed to pull the coupling 9 into engagement with the connection flange 7. By doing this, the coupling flange 14 of the coupling 9 will be aligned with and abut the connection flange 7, as shown with the position in Fig. 16.

In Fig. 16, the coupling flange 14 has been pulled into engagement with the connection flange 7, and the pull-in and clamping units 117, as well as the clamping element 118, have all been clamped onto the two facing flanges 7, 14 to provide a sealed connection. To release the coupling 9 from the connection flange 7, the opposite operation is performed.

Fig. 17, Fig. 18 and Fig. 19 depict the connection operation discussed with reference to Fig. 14 to Fig. 16 in better detail.

Fig. 17 is a cross section view of the offshore loading hose coupling 9 in a state wherein it has just landed onto the connection flange 7. That is, it has just received the connection flange 7 in its connection flange reception space 28. The main body rests on an upper face of the connection flange 7 with a landing and sliding face 124 on the upper guide arm 123. The guide arms 123 each comprises two plates 123a arranged in parallel with a mutual distance. A landing and sliding face 124 is thus in this embodiment arranged on an edge portion of each of these two plates 123a.

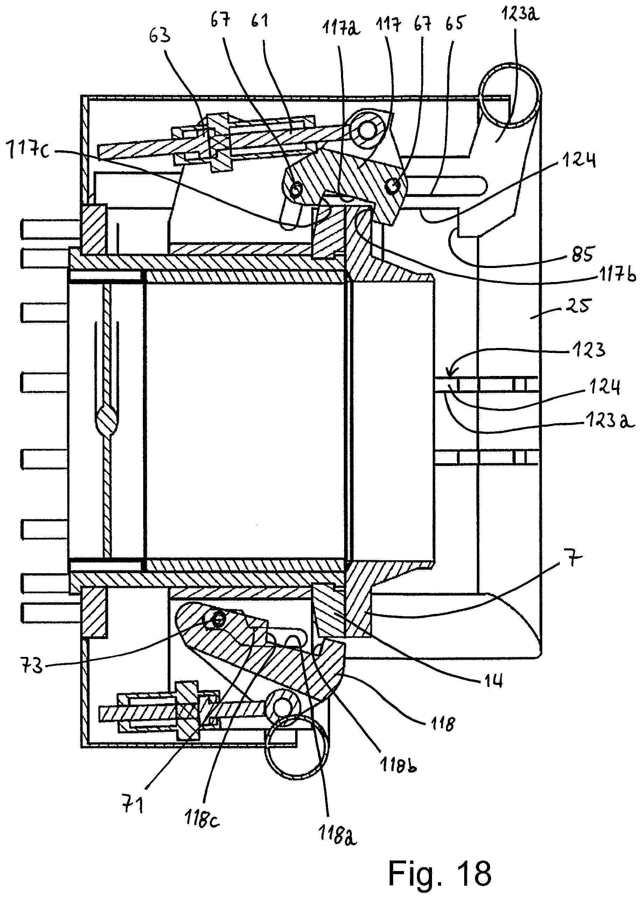

In the cross section view of Fig. 18, the rim of the connection flange 7 can be seen extending into a recess 117a of the upper pull-in and clamping unit 117. The same situation exists for the two laterally arranged pull-in and clamping units 117. Notably, the clamping element 118 at the bottom of the hose coupling 9 is still in a retracted position, and did not interfere with the landing process when landing the coupling 9 onto the connection flange 7.

To each of the respective pull-in and clamping units 117 there is attached an actuation rod 61. The actuation rods further connect to respective hydraulic pistons 63, and are thus configured to move the pull-in and clamping units 117 back and forth by application of pressurized hydraulic fluid.

To move the connection flange 7 and the coupling flange 14 together, the operator can apply hydraulic pressure to the pistons, to pull the pull-in and clamping units 117 backwards, i.e. in a direction towards the hose end 15. The connection flange 7 engages with forward engagement edge 117b of the recesses 117a. As a result, the entire hose coupling 9 slides on the connection flange 7, until the connection flange 7 abuts with the coupling flange 14. This position is shown in Fig. 18.

During this pull-in movement, the pull-in and clamping units 117 are guided along guide slots 65 in the two plates 123a of the guide arms 123. As can be seen in Fig. 13 and Fig. 14, inter alia, the pull-in and clamping units 117 are arranged snugly between the two plates 123a. Furthermore, the pull-in and clamping units 117 each comprises two guide pins 67 that extend into the guide slots 65 on both sides (i.e. in each of the two plates). In Fig. 18, the position of the two guide pins 67 are indicated. The shape of the guide slots 65 appears from Fig. 17 and Fig. 18.

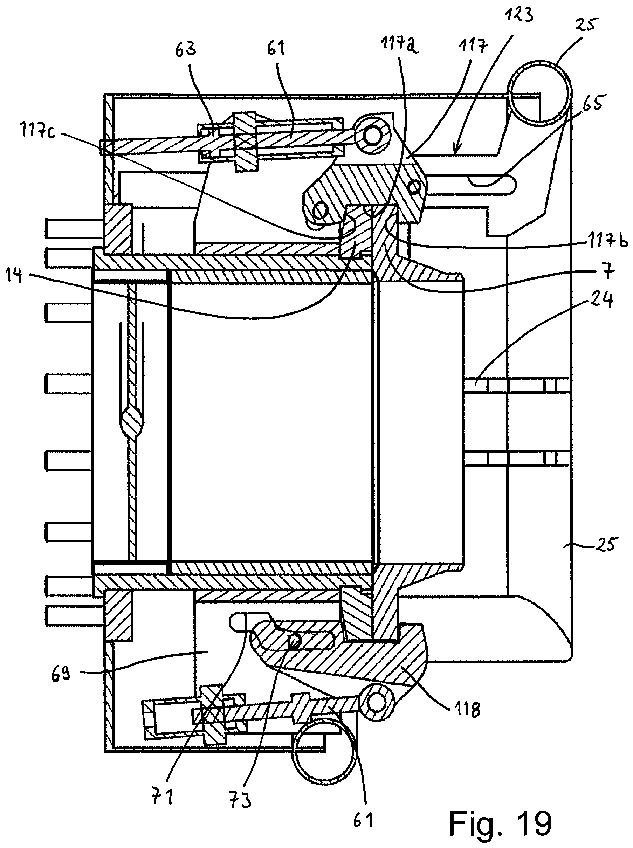

While Fig. 18 illustrate the situation immediately after pull-in, Fig. 19 depicts the situation wherein the connection flange 7 and the coupling flange 14 have been clamped together. Compared to the situation shown in Fig. 18, the pull-in and clamping units 117 have now been pulled even further backwards, resulting in a pivoting movement. A rear portion of the coupling flange 14 now engages a rear engagement edge 117c of the recess 117a.

When pulling the pull-in and clamping units 117 with the actuation rods 61, the two guide pins 67 will slide along a straight, forward portion of the guide slot 65. When the coupling flange 14 abuts the connection flange 7, the axial movement halts and a pivoting movement commences. During this pivoting movement, a rear guide pin 67 slides along an inclined rear portion of the guide slot 65, so that the rear engagement edge 117c slides onto said rear portion of the coupling flange 14. By maintaining the three pull-in and clamping units 117 in this clamped position, the connection will remain.

The clamping element 118 is also connected to an actuation rod 61 that connects to a hydraulic piston. As appears by comparing Fig. 18 and Fig. 19, the clamping action of the clamping element 118 is provided by moving the actuation rod 61 in a forward direction. The clamping element 118 is arranged between two clamping unit plates 69. In each clamping unit plate 69 there is provided a clamping unit guide slot 71, into which a clamping unit guide pin 73 extends. The clamping unit guide slot 71 and clamping unit guide pin 73 are indicated in Fig. 18 and in Fig. 19. When moving the actuation rod 61 forwards, the clamping unit pivots and clamps over both the connection flange 7 and the coupling flange 14.

Hence, when in the clamped position, as shown in Fig. 19, the two flanges 7, 14 are clamped together at four locations. In other embodiments, one may apply another number of pull-in and clamping units 117 and clamping units 118.

Similar to the pull-in and clamping units 117, the clamping unit 118 also comprises a recess 118a with a forward engagement edge 118b and a rear engagement edge 118c, which are configured to clamp the two flanges 7, 14 together.

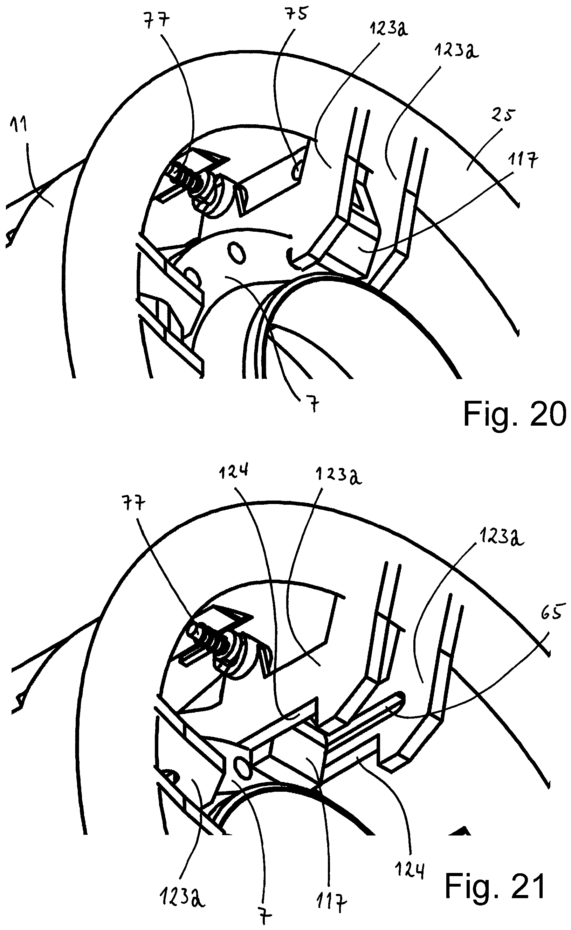

Fig. 20 and Fig. 21 are enlarged perspective views of a part of the coupling 9 before pull-in and after clamping, respectively. As shown in Fig. 20, in the body of the pull-in and clamping unit 117, there is a locking bore 75. When retracted into the clamping position, as shown in fig. 21, the locking bore 75 aligns with a locking pin 77, which is supported in one of the plates 123a. By inserting the locking pin 77 through an aperture in the plate as well as into the locking bore 75, the pull-in and clamping unit 117 is locked in place, thus retaining the clamping if hydraulic pressure should fail.

Advantageously, the locking pin 77 can be supported as shown, in one of the plates 123a, but it may also be supported by other components of the hose coupling 9.

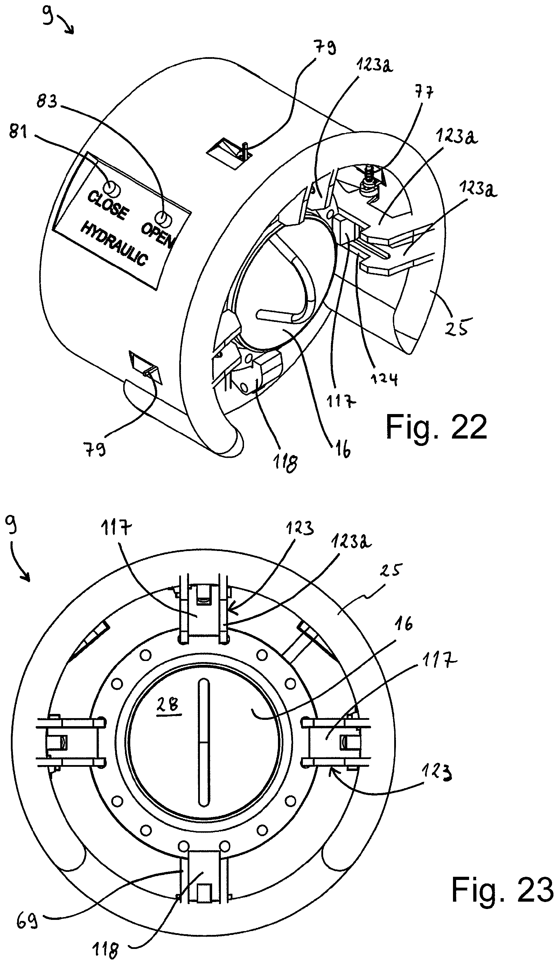

Advantageously, all three pull-in and clamping units 117 are provided with such a locking mechanism 75, 77. Fig 22 depicts the hose coupling with a perspective view and with the protection cover 16 in place. Accessible from the outside of the main body 11, each locking mechanism 75, 77 is provided with a manually operated locking lever 79 by means of which the operator may operate the locking mechanism.

Advantageously, the connection may be released manually by operation of the locking lever 79, without any application of hydraulic fluid. In such embodiments, the hydraulic fluid is only needed when pulling in and clamping.

As the skilled person will appreciate, other means than hydraulic pistons may be used in order to actuate the actuation rods 61, for instance a mechanical jack or electric actuators.

Also shown in Fig. 22 are hydraulic connections for application of hydraulic fluid. In order to pull in and clamp the connection, the operator applies hydraulic pressure to the close port 81. In order to release the connection, hydraulic pressure is applied to the open port 83.

In alternative embodiments, instead of the shown hydraulic ports 81, 83, there may be arranged operation interfaces, such as push buttons, which operate hydraulic valves within the main housing 11. In such embodiment, a pressurized hydraulic source may be connected to the coupling 9 elsewhere (not shown) or the source may be an integral part of the hose coupling 9, in form of a hydraulic accumulator (not shown).

Fig. 23 depicts the hose coupling 9 in a front view. In this view, one can particularly well se the distribution of the guide arms 123 about the central axis. In this embodiment, one guide arm 123, having landing and sliding faces 124 is arranged directly above the center axis, while two guide arms 123, also with landing and sliding faces 124, are arranged directly laterally with respect to the center axis. The mutual distance between the sliding faces 124 of the two lowermost guide arms 123 must be sufficient to let the connection flange 7 enter into the reception space 28.

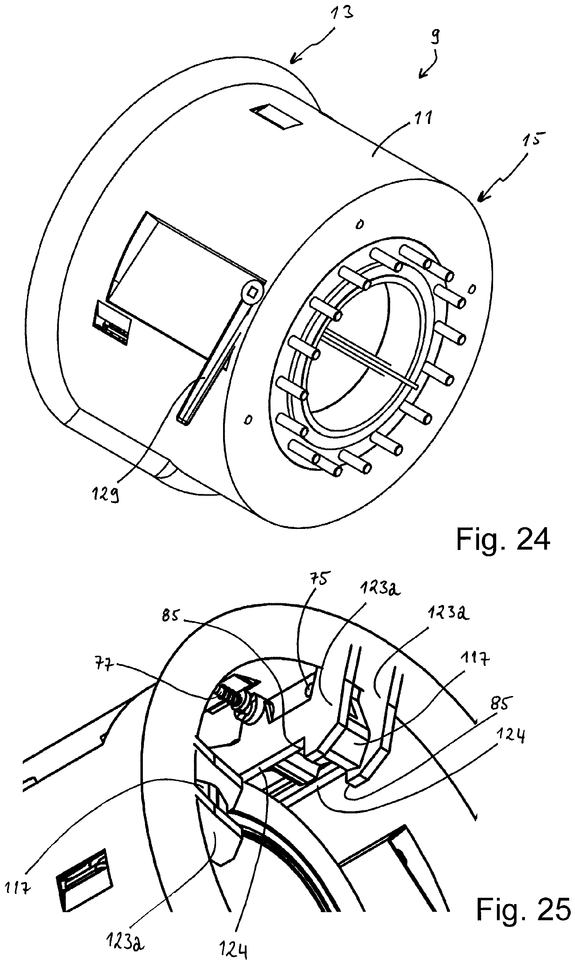

Fig. 24 depicts the hose coupling 9 in a perspective view, partially from behind where the hose end 15 is visible. The hose 1 itself is not shown. A valve operation arm 129 is accessible on the outside of the main body 11, by which the integrated valve 27 (not visible) is operable.

Reference is made to Fig. 25, which is another enlarged perspective view of the landing and guiding arrangement 121, as well as to Fig. 17 and Fig. 18. Fig. 25 shows the pull-in and clamping units 117 in the axially exerted position, in which the coupling 9 is ready to land onto the connection flange 7. Notably, in this position, the recess 117a, the forward engagement edge 117b and the rear engagement edge 117c are protected within the space between the two plates 123a of the guide elements 123 (guide arms). This protected position is also shown in Fig. 17. In this position, the edges of the two plates 123a extend further radially inwards than what the pull-in and clamping units 117 do. This feature contributes in protecting the pull-in and clamping units 117 during landing of the hose coupling 9 onto the connection flange 7.

Also particularly visible in Fig. 25 and Fig. 18 is a flange retention edge 85 provided on each of the plates 123a. A forward portion of the plates 123a extends radially inwards beyond the radial extension of the connection flange 7. Thus, when the coupling 9 has landed onto the connection flange 7, with a substantially vertical direction as discussed above, the flange retention edges 85 will retain the hose coupling in place on the connection flange 7, even before the connection is made up. This feature contributes inter alia to safety, as a possible loose lifting wire extending from the crane arrangement 5 (cf. Fig. 1 to Fig. 3) could otherwise result in large movements of the hose 1 and the coupling 9. The flange retention edges 85 will however prevent this, as the coupling 9 cannot move out from its engagement with the connection flange 7 without being lifted up with a vertical movement.

## Claims

1. Offshore loading hose coupling (9) comprising a coupling flange (14), a plurality of guide elements (123), which extend axially beyond the coupling flange (14) and which comprise a landing and sliding face (124), wherein the offshore loading hose coupling (9) further comprises a plurality of pull-in and clamping units (117), which are movable along the guide elements (123) in a substantially axial direction, and which are configured to pull in and clamp a connection flange (7) to the coupling flange (14), as they comprise a forward engagement edge (117b) and a rear engagement edge (117c) configured to engage said connection flange (7) and coupling flange (14), wherein the pull-in and clamping units (117) and the guide elements (123) comprise guiding means (65, 67) configured to guide the pull-in and clamping means (117) along a pull-in path and a successive clamping path during pull-in and clamping, wherein the pull-in and clamping units (117) are arranged between two plates (123a), **characterized in that** the plates (123a) comprises flange retention edges (85), which face at least partly in an axial rearwards direction, and which extend radially inwards beyond the radial extension of the coupling flange (14).

2. Offshore loading hose coupling (9) according to claim 1, **characterized in that** the pull-in path constitutes a linear movement in the axial direction, and that the clamping path constitutes a pivoting movement of the pull-in and clamping units (117), said pivoting movement taking place about a pivot axis extending in a direction orthogonally to a centerline (26) through the coupling flange (14) and with a distance from the centerline (26).

3. Offshore loading hose coupling (9) according to claim 1, **characterized in that** when in an extended, not pulled in position, the radially inwardly facing edges of the plates (123a) extend radially inwardly beyond the position of the forward engagement edge (117b) and the rear engagement edge (117c) of the pull-in and clamping units (117).

4. Offshore loading hose coupling (9) according to one of the claims 1 to 3, **characterized in that**
- the landing and sliding faces (124) are distributed along a curve corresponding to a curved upper flange edge (8) of the connection flange (7);
- the two lowermost landing and sliding faces (124) are positioned to permit entry of the connection flange (7) into a reception space (28) along a vertical direction;
- at least one landing and sliding face (124) is arranged on respective sides of a vertical plane extending through the axial center line (26) of the coupling flange (14).

5. Offshore loading hose coupling (9) according to one of the claims 1 to 4, **characterized in that** it further comprises a clamping element (118) arranged below a horizontal plane extending through an axial centerline (26) of the connection flange (14), wherein the clamping element (18) is configured to take a non-clamped position and a clamped position, wherein the non-clamped position is axially behind the clamped position.

## Patentansprüche

1. Offshore-Beladungsschlauchkupplung (9) mit einem Kupplungsflansch (14), einer Mehrzahl von Führungselementen (123), die sich axial über den Kupplungsflansch (14) hinaus erstrecken und die eine Aufsetz- und Gleitfläche (124) aufweisen, wobei die Offshore-Beladungsschlauchkupplung (9) ferner eine Mehrzahl von Einzieh- und Klemmeinheiten (117) aufweist, die entlang der Führungselemente (123) in einer im Wesentlichen axialen Richtung beweglich sind, und die so konfiguriert sind, dass sie einen Verbindungsflansch (7) an den Kupplungsflansch (14) ziehen und festklemmen, da sie eine vordere Eingriffskante (117b) und eine hintere Eingriffskante (117c) aufweisen, die so konfiguriert sind, dass sie mit dem Verbindungsflansch (7) und dem Kupplungsflansch (14) in Eingriff kommen, wobei die Einzieh- und Klemmeinheiten (117) und die Führungselemente (123) Führungsmittel (65, 67) aufweisen, die so konfiguriert sind, dass sie die Einzieh- und Klemmmittel (117) während des Einziehens und Klemmens entlang eines Einziehwegs und eines nachfolgenden Klemmwegs führen, wobei die Einzieh- und Klemmeinheiten (117) zwischen zwei Platten (123a) angeordnet sind, **dadurch gekennzeichnet, dass** die Platten (123a) Flanschhaltekanten (85) aufweisen, die zumindest teilweise in eine axiale Rückwärtsrichtung weisen und die sich radial nach innen über die radiale Ausdehnung des Kupplungsflanschs (14) hinaus erstrecken.

2. Offshore-Beladungsschlauchkupplung (9) nach Anspruch 1, **dadurch gekennzeichnet, dass** der Einzugsweg eine lineare Bewegung in axialer Richtung darstellt und dass der Klemmweg eine Schwenkbewegung der Einzugs- und Klemmeinheit (117) darstellt, wobei die Schwenkbewegung um eine Schwenkachse erfolgt, die in einer Richtung orthogonal zu einer Mittellinie (26) durch den Kupplungsflansch (14) und mit einem Abstand zur Mittellinie (26) verläuft.

3. Offshore-Beladungsschlauchkupplung (9) nach Anspruch 1, **dadurch gekennzeichnet, dass** in einer ausgefahrenen, nicht eingezogenen Position die radial nach innen weisenden Kanten der Platten (123a) radial nach innen über die Position der vorderen Eingriffskante (117b) und der hinteren Eingriffskante (117c) der Einzieh- und Klemmeinheiten (117) hinausragen.

4. Offshore-Beladungsschlauchkupplung (9) nach einem der Ansprüche 1 bis 3, **dadurch gekennzeichnet, dass**
- die Aufsetz- und Gleitflächen (124) entlang einer Kurve verteilt sind, die einer gekrümmten oberen Flanschkante (8) des Verbindungsflanschs (7) entspricht;
- die beiden untersten Aufsetz- und Gleitflächen (124) so positioniert sind, dass sie den Eintritt des Verbindungsflanschs (7) in einen Aufnahmeraum (28) entlang einer vertikalen Richtung ermöglichen;
- mindestens eine Aufsetz- und Gleitfläche (124) auf jeweiligen Seiten einer vertikalen Ebene angeordnet ist, die sich durch die axiale Mittellinie (26) des Kupplungsflanschs (14) erstreckt.

5. Offshore-Beladungsschlauchkupplung (9) nach einem der Ansprüche 1 bis 4, **dadurch gekennzeichnet, dass** sie ferner ein Klemmelement (118) aufweist, das unterhalb einer durch eine axiale Mittellinie (26) des Anschlussflanschs (14) verlaufenden horizontalen Ebene angeordnet ist, wobei das Klemmelement (18) so ausgebildet ist, dass es eine nicht geklemmte Position und eine geklemmte Position einnehmen kann, wobei die nicht geklemmte Position axial hinter der geklemmten Position liegt.

## Revendications

1. Raccord de tuyau flexible de chargement en mer (9) comprenant une bride de raccord (14), une pluralité d'éléments de guidage (123), qui s'étendent axialement au-delà de la bride de raccord (14) et qui comprennent une face de pose et de coulissement (124), dans lequel le raccord de tuyau flexible de chargement en mer (9) comprend en outre une pluralité d'unités de traction et de serrage (117), qui sont mobiles le long des éléments de guidage (123) dans une direction sensiblement axiale, et qui sont configurées pour tirer et serrer une bride de connexion (7) sur la bride de raccord (14), car elles comprennent un bord de mise en prise avant (117b) et un bord de mise en prise arrière (117c) configurés pour mettre en prise ladite bride de connexion (7) et ladite bride de raccord (14), dans lequel les unités de traction et de serrage (117) et les éléments de guidage (123) comprennent des moyens de guidage (65, 67) configurés pour guider les moyens de traction et de serrage (117) le long d'un trajet de traction et d'un trajet de serrage successif pendant une traction et un serrage, dans lequel les unités de traction et de serrage (117) sont agencées entre deux plaques (123a), **caractérisé en ce que** les plaques (123a) comprennent des bords de retenue de bride (85), qui sont orientés au moins en partie dans une direction axiale vers l'arrière, et qui s'étendent radialement vers l'extérieur au-delà de l'extension radiale de la bride de raccord (14).

2. Raccord de tuyau flexible de chargement en mer (9) selon la revendication 1, **caractérisé en ce que** le trajet de traction constitue un déplacement linéaire dans la direction axiale, et **en ce que** le trajet de serrage constitue un mouvement de pivotement des unités de traction et de serrage (117), ledit mouvement de pivotement s'effectuant autour d'un axe de pivotement s'étendant dans une direction orthogonale à un axe central (26) à travers la bride de raccord (14) et à une certaine distance de l'axe central (26).

3. Raccord de tuyau flexible de chargement en mer (9) selon la revendication 1, **caractérisé en ce que**, dans une position étendue, sans traction, les bords orientés radialement vers l'intérieur des plaques (123a) s'étendent radialement vers l'intérieur au-delà de la position du bord de mise en prise avant (117b) et du bord de mise en prise arrière (117c) des unités de traction et de serrage (117).

4. Raccord de tuyau flexible de chargement en mer (9) selon l'une quelconque des revendications 1 à 3, **caractérisé en ce que**
- les faces de pose et de coulissement (124) sont réparties selon une courbe correspondant à un bord de bride supérieur incurvé (8) de la bride de raccord (7) ;
- les deux faces de pose et de coulissement les plus basses (124) sont positionnées pour permettre une entrée de la bride de connexion (7) dans un espace de réception (28) le long d'une direction verticale ;
- au moins une face de pose et de coulissement (124) est agencée sur des côtés respectifs d'un plan vertical s'étendant à travers la ligne centrale axiale (26) de la bride de raccord (14).

5. Raccord de tuyau flexible de chargement en mer (9) selon l'une quelconque des revendications 1 à 4, **caractérisé en ce qu'**il comprend en outre un élément de serrage (118) agencé au-dessous d'un plan horizontal s'étendant à travers une ligne centrale axiale (26) de la bride de connexion (14), dans lequel l'élément de serrage (18) est configuré pour prendre une position non serrée et une position serrée, dans lequel la position non serrée est axialement derrière la position serrée.
